# EUROPEAN PATENT APPLICATION

(11) **EP 1 865 159 A2**
(43) Date of publication of application: **12.12.2007**
(21) Application number: 07109039.3
(22) Date of filing: 28.05.2007
(51) Int. Cl.: F01M 9/10

(54) **A shaft mounting device for an engine**

(30) Priority: 07.06.2006 US 422644
(71) Applicant: Ford Global Technologies, LLC, Dearborn, MI 48126 (US)
(72) Inventor: Reinhart, Paul, Livonia, MI 48152 (US); Reno, George, Dearborn, MI 48125 (US); Jin, Judy, W. Bloomfield, MI 48322 (US)
(74) Representative: Messulam, Alec Moses

(57) **Abstract**

A shaft mounting device for an internal combustion engine includes a bearing body 26 defining a lubricant distribution channel 62 and a lubrication inlet port 58, a flow regulator 66 is formed as an integral part of the bearing body 26 without the need for machining by using a casting or sintering process to manufacture the bearing cap 26.

## Description

The present invention relates to a shaft mounting device for use in an internal combustion engine.

Modern pressure-lubricated, multi-cylinder internal combustion engines have literally dozens of bearings which must be supplied with lubricant by means of a centrally located oil pump. As part of the engine development process, the amount of lubricant reaching each bearing must be carefully metered so as to assure that all bearings are adequately lubricated, but without scheduling too much lubricant.

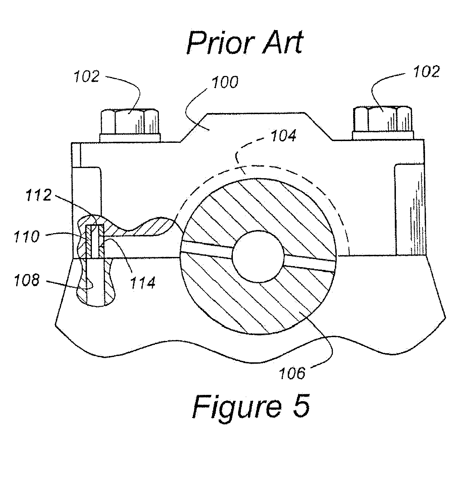

Oversupplying lubricant to engine bearings is disadvantageous for at least two reasons. First, an oversized oil pump will consume excessive energy, which degrades fuel economy. And, excessive churning of the oil by an oversize pump needlessly increases the amount of heat put into the oil. Thus, engine developers go through a tuning process in which the amount of oil going through various passages is carefully controlled. One method for controlling the amount of oil flowing through a passage is by placing a restrictor in the passage. Figure 5 shows a prior art restrictor incorporated within bearing cap 100, which is maintained in contact with an engine part by means of screws 102. Bearing cap 100 has a lubricant channel, 104, which is provided with oil by means of lubricant supply port 108. The actual flow of oil through channel 104 is controlled by flow restrictor 110, which includes an axially drilled passage 112, and a radially drilled passage 114.

A problem with the prior art restrictor shown in Figure 5 resides in the fact that restrictor 110 requires additional expense because of the need to machine passages within the restrictor. These fine passages must be carefully cleaned and inspected during manufacturing of the restrictor, and this adds more expense. Moreover, fine passageways may become plugged with contamination, thereby starving a bearing intended to be furnished with oil.

It is known to manufacture a bearing cap with a restrictor by starting with a part having an unmachined lubricant passage. A milling process removes material to define the channel, including the restrictor. Unfortunately, such machining is expensive and time consuming.

It is an object of this invention to provide a shaft mounting device that provides oil flow regulation which is easily tunable but which can be manufactured at a lower cost than prior art lubricant regulation devices.

A shaft mounting device for an internal combustion engine, characterised in that the shaft mounting device comprises a bearing body having a mounting base for attachment to an engine structure, a semi-circular bore extending upwardly from the mounting base formed in the bearing body, a lubricant inlet port in the mounting base communicating with a lubricant distribution channel extending about the circumference of the semi-circular bore and a flow regulator formed as an integral part of the bearing body to regulate the flow of lubricant from the lubricant inlet port to the lubricant distribution channel.

The flow regulator may comprise a hydraulic obstruction extending partially into one of the lubricant inlet port and an upstream end of the lubricant distribution channel.

The flow regulator and the bearing body may be integrally formed from one of a sintered metal powder, metal and a composite material.

The bearing body and the flow regulator may be integrally formed by a sintering process.

The sintering process may be a metal sintering process.

The bearing body and the flow regulator may be integrally formed by a metal casting process.

In one application the bearing body may be adapted to secure a crankshaft within an engine.

In an alternative application the shaft mounting device may be a camshaft mounting device and the bearing body may be a camshaft bearing cap.

The camshaft mounting device may comprise a camshaft bearing cap body having a mounting base for engaging an engine cylinder head, a semi-circular bore extending upwardly from the mounting base formed in the bearing cap body, a lubricant inlet port communicating with a lubricant distribution channel extending about the circumference of the semi-circular bore and a formed-in-place flow regulator located in the lubricant flow path downstream from the lubricant inlet port to regulate the flow of lubricant to the lubricant distribution channel.

The flow regulator may comprise a hydraulic obstruction extending partially across a portion of one of the lubrication port and an inlet end of the lubrication distribution channel.

According to a second aspect of the invention there is provided a cylinder head for an internal combustion engine, comprising a cylinder head, at least one camshaft retained upon the cylinder head and at least one lubricant supply passage formed in the cylinder head for supplying lubricant to the at least one camshaft characterised in that the or each camshaft is retained on the cylinder head by a shaft mounting device in the form of a camshaft bearing cap constructed in accordance with said first aspect of the invention.

The at least one camshaft mounting device may comprise a cap-shaped bearing body having a mounting base for mounting on the cylinder head, a semi-circular bore formed in the bearing body (26), the semi-circular bore cooperating with a mating semi-circular bore formed in the cylinder head to define a bearing surface for encircling a portion of the camshaft, a lubricant inlet port extending upwardly from the mounting base for receiving lubricant from a respective lubricant supply passage formed in the cylinder head, a lubricant distribution channel extending about the circumference of the semi-circular bore formed in the bearing body communicating with the lubricant inlet port and an integrally formed flow regulator located downstream from the lubricant inlet port.

The flow regulator may comprise a hydraulic obstruction formed integrally with the cap-shaped bearing body extending partially across a portion of one of the lubricant inlet port or an upstream end of the lubricant distribution channel.

According to a third aspect of the invention there is provided an engine having a crankshaft rotatably retained to an engine block characterised in that the crankshaft is rotatably retained by a crankshaft end cap constructed in accordance with said first aspect of the invention.

It is an advantage of a shaft mounting device according to the present invention that lubricant flow may be carefully controlled, with minimal risk of losing flow due to plugging of a flow restrictor.

It is a further advantage of a shaft mounting device according to the present invention that the flow restriction incorporated integrally in the bearing body of the shaft mounting device may be easily adjusted to change the amount of flow reaching bearings downstream from the restrictor.

It is a further advantage of the present shaft mounting device that the integral restrictor is less costly than prior art restrictors, because the hydraulic obstruction may be formed during the casting portion of a manufacturing process for the shaft mounting device, which is particularly facilitated in the case in which the bearing body is formed from either cast metal or sintered powder metal.

The invention will now be described further, by way of example, with reference to the accompanying drawings, in which :-
Figure 1 is a plan view of an engine cylinder head including a shaft mounting device according to the present invention;
Figure 2 is a part cross-sectional view of a portion of the cylinder head shown in Figure 1 taken along the line 2-2 on Figure 1;
Figure 3 is a section view taken along the line 3-3 of Figure 2;
Figure 4 is a perspective view of the present shaft mounting device, in this case a camshaft cap, showing the underside of a camshaft cap 22; and
Figure 5 illustrates a prior art camshaft cap.

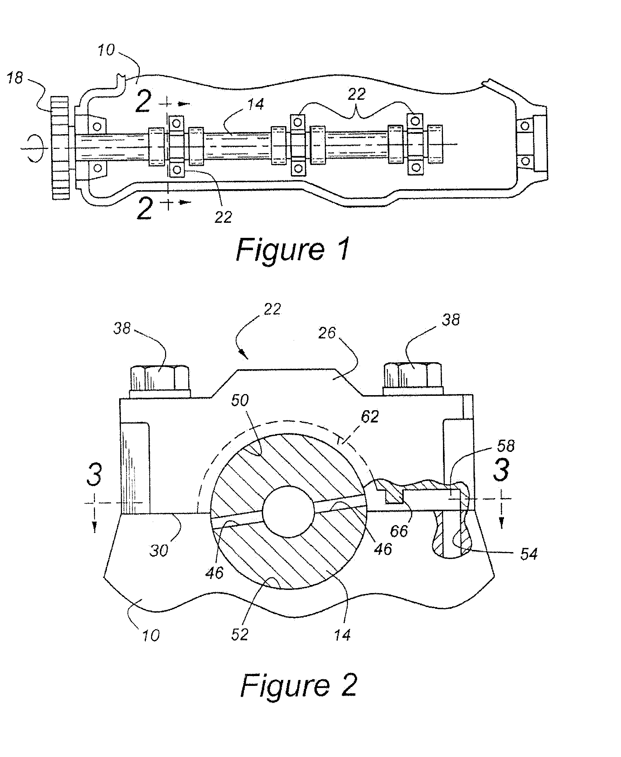

As shown in Figure 1, a cylinder head 10 of an internal combustion engine has camshaft 14 which is drivable by means of a sprocket 18 and is maintained in contact with cylinder head 10 by means of a plurality of inventive shaft mounting devices, which are embodied as camshaft caps 22. As fully described below, oil, needed for the operation of camshaft 14, is presented to mounting devices 22 by means of lubricant supply passages formed in the cylinder head 10.

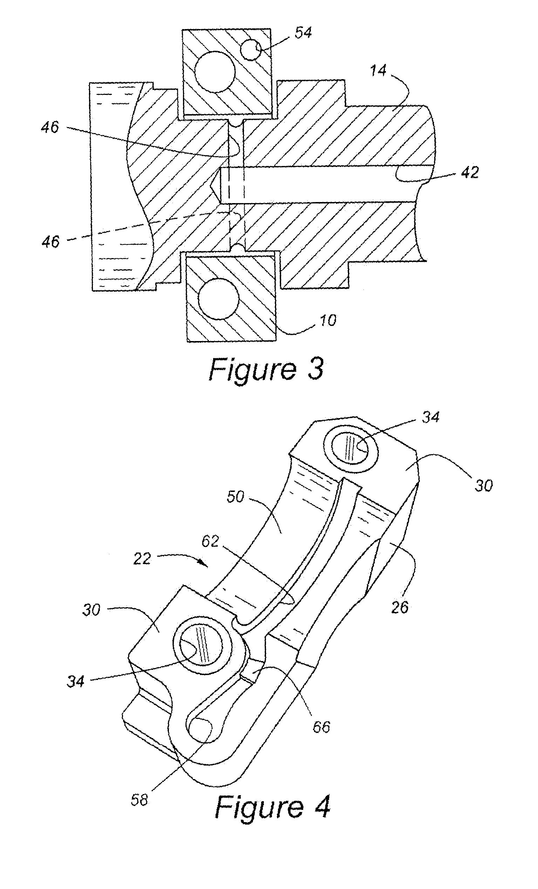

Figures 2 and 3 both show a lubricant supply passage, 54, which is formed in cylinder head 10. Lubrication flowing up through passage 54 enters lubricant inlet port 58, which is formed in camshaft cap 22. It is noted that cap 22 has a mounting base 30 which allows the cap 22 to be securely attached to the cylinder head 10 by means of fasteners in the form of screws 38. The camshaft cap 22 has a cap-shaped bearing body 26 with a semi-circular bore 50 formed therein. A lubricant lubrication channel 62 is formed in the semi-circular bore 50 to provide a circumferentially extending lubricant supply means. The bore 50 cooperates with a semi circular bore 52 formed in the cylinder head 10 to define a bearing surface for encircling a portion of camshaft 14. The portion of camshaft 14 which is encircled by the camshaft retainer or camshaft cap 22 includes two radially extending bores 46 which allows the oil introduced to shaft mounting device 22 from a lubricant supply passage 54 formed in the cylinder head 10 to eventually enter camshaft 14 and then to flow along the length of longitudinal bore 42 (Figure 3) which is formed in camshaft 14.

The elegance and simplicity of the present invention are fully displayed in Figure 2, where a hydraulic obstruction or weir 66 is illustrated. Because the entirety of shaft mounting device 22 including the hydraulic obstruction 66 as well as lubricant distribution channel 62 are formed in the camshaft cap 22 during manufacture of the camshaft cap 22 by a casting or sintering process, the risks and expense of machining are eliminated. In this regard, it will be appreciated that, one machining risk is the under-machining passages which may cause unwanted flow restriction.

In essence, the hydraulic obstruction 66 functions as a weir or flow regulator at the upstream end of the lubricant distribution channel 62 and in the example shown the weir 66 extends partially into the lubricant inlet port 58 but could also be formed at the upstream end of the lubricant distribution channel 62 itself. The hydraulic obstruction 66 is also shown in Figure 4 and it is easily seen from Figures 2 and 4 that the height and length of hydraulic obstruction 66 may be easily decreased during engine development work, so as to tune the flow of lubricant fluid passing from lubricant inlet port 58 to lubricant distribution channel 62. Note also that the adjustment of the size of hydraulic obstruction 66 during engine development may be accomplished with the use of simple grinding tools; unlike the situation with the prior art restrictor shown in Figure 5, it is often not necessary to re-machine a separate oil restrictor, which must be then carefully cleaned of chips.

The problems encountered in manufacturing the prior art restrictor of Figure 5 in large quantities are difficult to understate, given that the drillings required to manufacture the restrictor result in contamination, which, if not carefully removed during the manufacturing process, may cause subsequent damage, if not failure, of the very bearings which lubricant is meant to protect. This issue also arises with prior art bearing caps having machined oil distribution channels. As noted above, this difficulty is not an issue with the present inventive solution, which provides oil restriction in a robust, cost-effective manner.

Therefore in summary the invention provides both lubrication and retention to a rotating shaft within an engine, with the flow of lubrication being controlled by an integral flow restrictor contained within a bearing body portion of the shaft mounting device.

Although the invention has been described in detail with reference to use of the shaft mounting device as a camshaft mounting device it will be appreciated that the invention is more generally applicable and that for example the shaft mounting device could be a crankshaft end cap used to rotatably secure a crankshaft of an engine to a cylinder block of an engine.

Those skilled in the art will appreciate in view of this disclosure that the present shaft mounting device could be manufactured from cast metal or sintered metal powders or moulded composite materials.

Alternatively, various other materials such as composite metallic and non-metallic materials could be employed.

It will be appreciated by those skilled in the art that although the invention has been described by way of example with reference to one or more embodiments it is not limited to the disclosed embodiments and that one or more modifications to the disclosed embodiments or alternative embodiments could be constructed without departing from the scope of the invention as set forth in the appended claims.

## Claims

1. A shaft mounting device for an internal combustion engine, **characterised in that** the shaft mounting device (22) comprises a bearing body (26) having a mounting base (30) for attachment to an engine structure (10), a semi-circular bore (50) extending upwardly from the mounting base (30) formed in the bearing body (26), a lubricant inlet port (58) in the mounting base (30) communicating with a lubricant distribution channel (62) extending about the circumference of the semi-circular bore (50) and a flow regulator (66) formed as an integral part of the bearing body (26) to regulate the flow of lubricant from the lubricant inlet port (58) to the lubricant distribution channel (62).

2. A shaft mounting device as claimed in Claim 1 wherein the flow regulator comprises a hydraulic obstruction (66) extending partially into one of the lubricant inlet port (58) and an upstream end of the lubricant distribution channel (62).

3. A shaft mounting device as claimed in Claim 1 or in Claim 2 wherein the flow regulator (66) and the bearing body (26) are integrally formed from one of a sintered metal powder, metal and a composite material.

4. A shaft mounting device as claimed in Claim 1 or in Claim 2 wherein the bearing body (26) and the flow regulator (66) are integrally formed by a sintering process.

5. A camshaft mounting device as claimed in Claim 1 or in claim 2 wherein the bearing body (26) and the flow regulator (66) are integrally formed by a metal casting process.

6. A shaft mounting device as claimed in any of Claims 1 to 4 wherein the bearing body (26) is a crankshaft end cap adapted to secure a crankshaft within an engine.

7. A shaft mounting device as claimed in any of Claims 1 to 4 wherein the shaft mounting device is a camshaft mounting device and the bearing body is a camshaft bearing cap (22).

8. A cylinder head for an internal combustion engine, comprising a cylinder head (10), at least one camshaft (14) retained upon the cylinder head (10) and at least one lubricant supply passage (54) formed in the cylinder head (10) for supplying lubricant to the at least one camshaft (14) **characterised in that** the or each camshaft (14) is retained on the cylinder head (10) by a shaft mounting device (22) as claimed in claim 7.

9. A cylinder head as claimed in Claim 8 wherein the at least one camshaft mounting device comprises a cap-shaped bearing body (26) having a mounting base (30) for mounting on the cylinder head (10), a semi-circular bore (50) formed in the bearing body (26), the semi-circular bore (50) cooperating with a mating semi-circular bore (52) formed in the cylinder head (10) to define a bearing surface for encircling a portion of the camshaft (14), a lubricant inlet port (58) extending upwardly from the mounting base (30) for receiving lubricant from a respective lubricant supply passage (54) formed in the cylinder head (10), a lubricant distribution channel (62) extending about the circumference of the semi-circular bore (50) formed in the bearing body (26) communicating with the lubricant inlet port (58) and an integrally formed flow regulator (66) located downstream from the lubricant inlet port (58).

10. An engine having a crankshaft rotatably retained to an engine block **characterised in that** the crankshaft is rotatably retained by a shaft mounting device as claimed in claim 6.
